# FASCICULE DE BREVET EUROPEEN

(11) **EP 1 809 488 B1**
(45) Date de publication et mention de la délivrance du brevet: **18.06.2014**
(21) Numéro de dépôt: 05805566.6
(22) Date de dépôt: 09.09.2005
(51) Int. Cl.: B44B 3/06, B23Q 1/48, B23K 26/08

(54) **DISPOSITIF DE MARQUAGE**
MARKIERUNGSVORRICHTUNG
MARKING DEVICE

(30) Priorité: 10.09.2004 FR 0409655; 18.10.2004 FR 0410987
(43) Date de publication de la demande: 25.07.2007
(73) Titulaire: Sic Marking, 69360 Lissieu (FR)
(72) Inventeur: GALLAND, Jean-Marc, F-69380 Theize (FR); BARRAUD, Gérard, F-69640 Rivolet (FR)
(74) Mandataire: Le Cacheux, Samuel L.R.
(86) Numéro de dépôt international: PCT/FR2005/002246
(87) Numéro de publication internationale: WO 2006/030117

(56) Documents cités:
- DE-A1- 3 735 422
- FR-A- 2 639 860
- US-A- 3 992 819
- US-A- 4 618 758

## Description

La présente invention concerne le domaine technique des dispositifs permettant d'assurer le marquage de la surface d'un objet, par déformation de cette dernière notamment.

Ainsi, dans le domaine ci-dessus, il est connu de réaliser le marquage d'objets métalliques par micro percussions, au moyen d'un système de marquage comprenant une pointe qui est animée d'un mouvement alternatif de translation et qui vient frapper la surface à marquer, pour y former un impact sensiblement ponctuel.

Il est alors possible, en déplaçant l'organe de marquage dans deux directions croisées, de réaliser, sur la surface à marquer, des signes en deux dimensions.

Afin d'obtenir ce déplacement croisé de l'organe de marquage, il a été proposé, comme cela est par exemple décrit dans les demandes de brevets FR 2 839 860 et FR 2 256 833, de déplacer l'organe de marquage, d'une part, en translation et, d'autre part, en rotation autour d'un axe parallèle à la direction de translation. Le document DE-A-3735422 décrit un dispositif selon le préambule de la revendication 1.

Ainsi, il est possible, par la combinaison de ces mouvements de translation et de rotation, de déplacer l'organe de marquage dans une fenêtre, dite également de marquage, définie par l'amplitude de la translation et de la rotation. Les dispositifs fonctionnant sur ce principe permettent, effectivement, de réaliser des signes en deux dimensions de bonne qualité lorsque l'amplitude de rotation de l'organe de marquage est faible. Cependant, lors de la réalisation de marquages de grandes dimensions, impliquant une grande amplitude de rotation, il a été constaté que les points de marquage, situés à proximité immédiate des bords extrêmes de la fenêtre de marquage déterminés par la rotation de l'organe de marquage, ne présentaient pas une qualité aussi bonne que les points de marquage réalisés au centre de la fenêtre dans la région ne nécessitant qu'une très faible amplitude de rotation de l'organe de marquage.

Ainsi, il est apparu le besoin d'apporter une solution à cette dégradation de la qualité du marquage pour les grandes fenêtres de marquage, tout en conservant le principe de déplacement de l'organe de marquage consistant à faire pivoter ce dernier dans l'une au moins de ses directions de marquage. En effet, une telle cinématique permet de réduire l'encombrement général du dispositif de marquage, notamment pour ce qui concerne les dimensions imposées par la cinématique adoptée pour le déplacement obtenu par la rotation de l'organe de marquage.

Afin d'atteindre cet objectif d'obtention d'une bonne qualité de marquage en tout point de la fenêtre, y compris pour de grandes amplitudes de rotation de l'organe de marquage, l'invention concerne un dispositif pour le marquage d'une surface comprenant :
◆ un châssis porteur,
◆ des moyens de marquage qui comprennent un organe de marquage adapté pour réaliser un point ou une marque sensiblement ponctuelle,
◆ et des moyens de déplacement de l'organe de marquage parallèlement à deux plans de mouvement perpendiculaires entre eux et à la surface à marquer pour réaliser, sur la surface à marquer, des signes en deux dimensions s'inscrivant dans une fenêtre de marquage définie par l'amplitude des déplacements de l'organe de marquage, le déplacement de l'organe de marquage parallèlement au plan de mouvement étant assuré par au moins une rotation de l'organe de marquage autour d'un axe parallèle à l'autre plan de mouvement,

Selon l'invention, le dispositif de marquage est caractérisé en ce qu'il comprend des moyens de compensation, au moins partielle, de l'influence de la rotation sur la distance entre l'organe de marquage et le point de marquage sur la surface à marquer. Au sens de l'invention, par moyens de compensation, il faut entendre des moyens qui compensent, automatiquement, l'influence de la rotation sur la distance entre l'organe de marquage et le point de marquage sur la surface à marquer. A cet effet, les moyens de compensation sont asservis à la rotation de l'organe de marquage, de manière à compenser, de façon automatique, l'influence de la rotation.

Ainsi, par la mise en oeuvre des moyens de compensation, les points de marquage, réalisés par l'organe de marquage, présentent tous une bonne qualité en tout endroit de la fenêtre de marquage.

Selon l'invention, la compensation peut être réalisée plus ou moins complètement.

Ainsi, selon une caractéristique de l'invention et dans le cadre d'une compensation partielle, les moyens de compensation sont adaptés pour maintenir, à une valeur constante, la distance mesurée perpendiculairement à la surface de marquage, entre l'organe de marquage et la surface à marquage.

Selon une autre caractéristique de l'invention et lorsqu'il est recherché une compensation totale des effets de la rotation de l'organe de marquage, les moyens de compensation sont adaptés pour maintenir, à une valeur constante, la distance entre l'organe de marquage et le point de marquage sur la surface à marquer.

Selon l'invention, les moyens de marquage peuvent être de différentes natures et, par exemple, assurer le marquage par une déformation locale de la surface à marquer, cette déformation pouvant être le résultat d'un impact ou poinçonnement ou, encore, d'une fusion locale du matériau constitutif de la surface à marquer ou graver.

Ainsi, lorsque le marquage est obtenu par poinçonnement ponctuel de la surface à marquer, selon une caractéristique de l'invention, les moyens de marquage comprennent un système à micro percussion comprenant, en tant qu'organe de marquage, une pointe de marquage mobile en translation alternative selon une direction, dite de marquage, entre une position de repos et une position de marquage, la position de repos de la pointe de marquage étant la référence pour la mesure de la distance entre, d'une part, l'organe de marquage et, d'autre part, la surface à marquer ou le point de marquage.

Lorsque le marquage est obtenu par fusion locale de la surface à graver, les moyens de marquage comprennent, selon une autre caractéristique de l'invention, une source laser et, en tant qu'organe de marquage, une lentille de marquage destinée à focaliser dans une direction, dite de marquage, un spot laser sur la surface à marquer, le centre optique de la lentille de marquage étant la référence pour la mesure de la distance entre, d'une part, l'organe de marquage et, d'autre part, la surface à marquer ou le point de marquage.

En effet, il a été constaté que, dans le cadre d'un marquage au moyen d'une source laser et afin d'utiliser toute l'énergie du rayon laser, il est nécessaire de réaliser une focalisation aussi précise au possible du rayon laser sur la surface à marquer, objectif que la mise en oeuvre des moyens de compensation selon l'invention permettent d'atteindre.

Il est à noter que le marquage à micro percussion ou le marquage laser présentent tous deux la caractéristique commune d'agir selon une direction de marquage correspondant, dans le cas de la micro percussion à la direction d'oscillation en translation de la pointe de marquage et, dans le cadre du laser, à la direction même de ce rayon.

Selon l'invention, la compensation de l'influence de la rotation de l'organe de marquage peut être réalisée de différentes façons. Ainsi, selon une forme de réalisation, les moyens de compensation sont adaptés pour induire une translation de l'organe de marquage par rapport à l'axe Ω et selon une direction Δ perpendiculaire à l'axe Ω lors de la rotation de l'organe de marquage autour de l'axe Ω.

Cette translation de l'organe de marquage, induite lors de sa rotation, peut alors être réalisée de différentes manières qui pourront être choisies en fonction de la cinématique générale du dispositif, de l'encombrement recherché ou, encore, de la précision à atteindre dans la compensation, étant entendu que cette dernière reste tributaire des jeux de fonctionnement de la cinématique adoptée.

Selon une variante de réalisation de l'invention, les moyens de compensation comprennent au moins une came coopérant avec un chemin de came dont le profil est adapté pour induire la translation de l'organe selon la direction Δ.

Selon une autre variante de réalisation, les moyens de compensation comprennent au moins :
◆ des moyens de définition d'une surface de référence,
◆ et des moyens de liaison de l'organe de marquage à la surface de référence, de manière à induire la translation de l'organe de marquage selon la direction (Δ).

La distance, entre l'organe de marquage et la surface de référence, pourra, dans certains cas, être parallèle à la surface à marquer, sans que cela soit strictement nécessaire à la réalisation de l'invention.

Selon l'invention, le déplacement de l'organe de marquage, parallèlement à l'un des plans de mouvement, est nécessairement obtenu par un mouvement impliquant une rotation de l'organe de marquage autour d'un axe perpendiculaire à ce plan de déplacement, tandis que le déplacement parallèlement à l'autre plan de mouvement peut être obtenu, soit par une translation pure, soit également par une rotation selon un axe perpendiculaire à cet autre plan de mouvement.

Dans la forme de réalisation du dispositif de marquage selon l'invention, pour laquelle le mouvement de l'organe de marquage est obtenu par la combinaison d'une translation et d'une rotation selon un axe parallèle à l'axe de translation, les moyens de déplacement de l'organe de marquage comprennent au moins :
◆ une voie qui est liée, de manière complète, au châssis et qui assure le guidage en translation d'un chariot selon une direction parallèle au plan et à la surface à marquer,
◆ des moyens moteurs de déplacement en translation dans les deux sens du chariot le long de la voie de guidage,
◆ un berceau oscillant qui supporte l'organe de marquage au moins et qui est adapté sur le chariot pour au moins pivoter par rapport au chariot selon l'axe parallèle à la direction,
◆ et des moyens moteurs de déplacement en rotation dans les deux sens du berceau selon l'axe.

Selon l'invention, les moyens moteurs de déplacement en rotation du chariot peuvent alors être solidaires du chariot ou, au contraire, être solidaires du châssis.

Dans une variante préférée, le berceau est lié au chariot sur une face orientée vers la surface à marquer et l'organe de marquage est adapté sur le berceau à l'opposé du chariot, tandis que les moyens moteurs de déplacement en rotation du berceau comprennent au moins un bras dont l'une des extrémités est liée au berceau et dont l'autre extrémité est située à l'opposé de la première et pourvue d'un secteur denté coopérant avec un pignon entraîné en rotation par un moteur.

Dans une variante plus particulièrement préférée de ce dispositif de marquage, le système de marquage est un système à micro percussion qui comprend une bobine électromagnétique, à l'intérieur de laquelle est disposé un noyau ferromagnétique qui agit sur une pointe de marquage et qui est mobile en translation dans la bobine, entre une position de repos et de marquage.

Les moyens de compensation comprennent alors une butée mobile, contre laquelle le noyau est appuyé en position de repos, qui est associée à un doigt formant came et coopérant avec un chemin de came solidaire du chariot, de sorte qu'une rotation du berceau entraîne un déplacement du doigt le long du chemin de came dont le profil est adapté pour modifier la position de repos du noyau et de la pointe de marquage, en fonction de la position angulaire du berceau.

Il doit être remarqué que, dans cette forme préférée de réalisation du dispositif de marquage selon l'invention, le fait que la voie de guidage en translation soit fixe et ne connaisse aucun mouvement de rotation permet de réduire la masse de l'équipage qui doit être manoeuvré en rotation, de sorte qu'il est obtenu une réduction du moment d'inertie de rotation, ce qui permet d'augmenter la vitesse de déplacement de l'organe de marquage.

Toutefois, selon l'invention, un tel mode de réalisation des moyens de déplacement n'est pas strictement nécessaire et la cinématique des moyens de déplacement de l'organe de marquage pourrait prévoir une mise en rotation de la voie de guidage.

Ainsi, selon une autre forme de réalisation de l'invention, les moyens de déplacement de l'organe de marquage comprennent au moins :
◆ une voie de guidage en translation qui possède une direction parallèle au plan et à la surface à marquer et qui est adaptée sur le châssis, de manière à être mobile, au moins en rotation, autour de l'axe,
◆ un chariot qui est adapté sur la voie de guidage pour être mobile en translation le long de cette dernière et qui est lié à l'organe de marquage,
◆ des moyens moteurs de déplacement en translation du chariot,
◆ et des moyens moteurs de déplacement en rotation de la voie de guidage.

Dans le cadre d'une telle cinématique, il est possible de prévoir différentes formes de réalisation des moyens de compensation.

Selon l'une des formes envisageables, le maintien de la distance d'efficacité est assuré au niveau de la cinématique de la voie de guidage.

A cet effet, les moyens de déplacement de l'organe de marquage sont, en outre, réalisés de manière que :
◆ la voie de guidage est adaptée sur le châssis pour être mobile en translation radiale selon une direction perpendiculaire à l'axe,
◆ et les moyens moteurs d'entraînement en rotation de la voie de guidage intègrent les moyens de compensation et sont adaptés pour induire, lors de la rotation de la voie de guidage, une translation de ladite voie de guidage.

Dans le cadre de cette variante de réalisation et selon une autre caractéristique de l'invention, il est alors possible de prévoir que :
◆ les moyens de déplacement en translation de la voie de guidage comprennent deux bras disposés chacun à une des deux extrémités de la voie de guidage et liés complètement à la voie de guidage,
◆ chaque bras comprend, d'une part, une lumière allongée rectiligne d'axe parallèle à un axe de marquage de l'organe de marquage et engagée sur un pion lié au châssis et, d'autre part, une fenêtre qui est incurvée et forme un chemin de came pour une came liée au châssis et dont le profil est adapté de manière à induire une translation des bras et de la voie de guidage selon la direction lors d'une rotation des bras et de la voie de guidage,
◆ et l'un au moins des bras présente un secteur denté qui coopère avec un pignon entraîné par un moteur.

Diverses autres caractéristiques de l'invention ressortent de la description ci-dessous effectuée en référence aux dessins annexés qui illustrent différentes formes, non limitatives, de réalisation du dispositif de marquage selon l'invention.

La **fig. 1** est une élévation latérale schématique d'une première forme de réalisation d'un dispositif de marquage selon l'invention, mettant en oeuvre un système à micro percussion à entraînement électromagnétique.

La **fig. 2** est une vue schématique en coupe partielle selon la ligne **II-II** de la **fig. 1****.**

Les **fig. 3 et 4** sont des vues, analogues aux **fig. 1** et **2****,** montrant une variante de réalisation des moyens de compensation.

La **fig. 5** est une vue, analogue à la **fig. 1****,** montrant une autre forme de réalisation d'un dispositif de marquage selon l'invention qui diffère de celles illustrée aux **fig. 1** à **4** dans la nature de la cinématique du déplacement de l'organe de marquage et dans le mode de réalisation des moyens de compensation, ainsi que dans le fait qu'elle met en oeuvre des moyens de marquage à laser.

La **fig. 6** est une vue schématique en coupe partielle selon la ligne **VI-VI** de la **fig. 5****.**

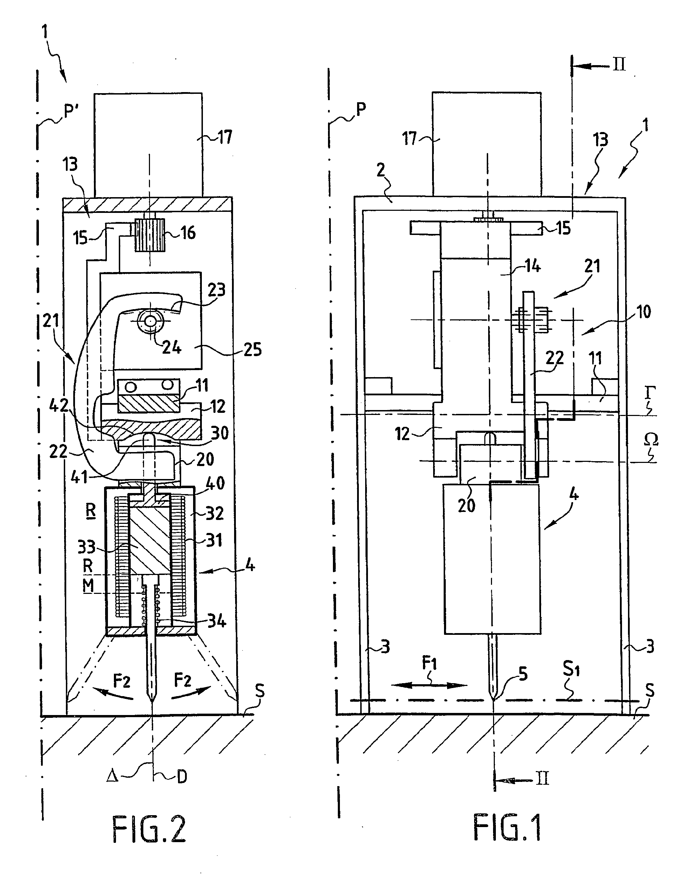

Un dispositif de marquage selon l'invention, tel qu'illustré schématiquement aux **fig. 1** et **2** et désigné dans son ensemble par la référence **1,** comprend un châssis porteur **2** qui, selon l'exemple illustré, présente deux jambes latérales **3,** destinées à venir en appui sur la surface à marquer **S.**

La présence des jambes **3** correspond à un mode de réalisation portatif qui rend le dispositif **1** susceptible d'être transporté par son utilisateur d'un endroit à un autre, en fonction des besoins. Bien entendu, la présence des jambes **3** n'est pas strictement nécessaire à la réalisation d'un dispositif de marquage selon l'invention qui pourrait également être adapté sur une potence, de sorte que les jambes **3** deviendraient parfaitement inutiles.

Le dispositif **1** comprend, en outre, des moyens de marquage **4** qui, selon l'exemple illustré, sont réalisés sous la forme d'un système à micro percussion électromagnétique comprenant, en tant qu'organe de marquage, une pointe de marquage **5,** dont l'extrémité est destinée à venir impacter la surface **S** pour y réaliser des conformations en creux ou points d'impacts, comme cela apparaîtra par la suite.

Dans la mesure où la pointe de marquage réalise des conformations sensiblement ponctuelles et où il est souhaité, conformément à un objectif de l'invention, réaliser des signes en deux dimensions sur la surface **S,** le dispositif de marquage **1** comprend, en outre, des moyens de déplacement **10** de l'organe de marquage **5.**

Selon l'exemple illustré, les moyens de déplacement **10** comprennent une voie de guidage en translation **11,** qui est liée au châssis **2.** Selon l'exemple illustré, la voie de guidage en translation **11** est réalisée sous la forme d'un rail de guidage, tel que, par exemple, un rail de guidage du commerce, fixé à ses deux extrémités au châssis **2.** Bien entendu, la voie de guidage en translation **11** pourrait être réalisée d'une toute autre façon, telle que, par exemple, décrite dans la demande de brevet FR 2 256 833.

Selon la forme de réalisation illustrée, la voie de guidage **11** est liée de manière complète au châssis, de sorte qu'elle ne peut connaître aucun déplacement relatif par rapport à ce dernier.

Les moyens de déplacement **10** comprennent, également, un chariot **12** qui est adapté sur la voie de guidage **11,** de manière à être mobile en translation selon une direction r, parallèle au plan de déplacement **P'.** Afin d'assurer le déplacement en translation du chariot **12** le long de la voie **11,** il est également prévu des moyens moteurs **13** de déplacement en translation du chariot. Ces moyens moteurs **13** comprennent un bras **14** qui s'étend à partir du chariot **12** et à l'opposé de la surface **S.** Le bras **14** présente, à son extrémité opposée au chariot **12,** une crémaillère **15** qui est parallèle à la direction r et qui coopère avec un pignon **16** entraîné en rotation par un moteur **17,** tel que, par exemple mais non exclusivement, un moteur électrique pas à pas. Ainsi, la commande par le moteur **17** de la rotation du pignon **16** permet d'obtenir une translation du chariot **12** le long de la voie **11**, selon la direction Γ et dans les deux sens. Il est à noter que le monteur **17** est fixé directement sur le châssis **2.**

Afin de permettre un déplacement de l'organe de marquage **5,** parallèlement au plan **P** perpendiculaire au plan **P',** les moyens de déplacement **10** comprennent, en outre, un berceau oscillant **20** qui est adapté sur le chariot **12,** de manière à pouvoir pivoter par rapport à ce dernier selon un axe **Ω** parallèle à la direction Γ et donc perpendiculaire au plan **P.**

Il est à noter que, selon l'exemple illustré, le chariot **12** est placé sur la face de la voie de guidage **11** orientée vers la surface **S,** tandis que le berceau **20** est lié au chariot **12** sur une face de ce dernier orientée, également, vers la surface à marquer, de sorte que le berceau **20** se trouve à l'opposé de la voie **11** par rapport au chariot **12.** De même, les moyens de marquage **4** et, plus particulièrement, la pointe **5** se trouvent adaptés sur le berceau **20,** à l'opposé du chariot **12,** de manière que la pointe **5** se trouve à proximité de la surface **S** à marquer, comme cela ressortira de la suite.

En vue de piloter la rotation du berceau **20** portant les moyens de marquage **4** et, plus particulièrement, la pointe **5,** les moyens de déplacement **10** comprennent, en outre, des moyens moteurs **21** de déplacement en rotation dans les deux sens du berceau **20.** Les moyens moteurs **21** de déplacement en rotation du berceau **1** comprennent alors au moins un bras **22** dont une extrémité est liée au berceau **20** et dont l'autre extrémité est située à l'opposé de la première, de l'autre côté de la voie de guidage **1.** Afin d'éviter tout conflit avec la voie de guidage **11,** le bras **22** présente, selon l'exemple illustré, une forme générale en « C ». L'extrémité du bras **22,** qui n'est pas liée au berceau **20,** est pourvue d'un secteur denté **23** qui coopère avec un pignon **24** entraîné par un moteur **25,** tel que, par exemple mais non exclusivement, un moteur électrique pas à pas.

Selon l'exemple illustré, le moteur **25** est solidaire du chariot **12** et, plus particulièrement, fixé sur son bras **14,** de sorte que l'ensemble des moyens moteurs **21** d'entraînement en rotation du berceau **20** se trouve déplacé en translation en même temps que le chariot **10** de l'organe de marquage formé par la pointe **5.**

Les moyens de déplacement **10** tels qu'ainsi constitués permettent d'assurer, par une commande du moteur **17,** une translation de la pointe **5** parallèlement au plan **P'** dans le sens de la double flèche **F₁,** tandis que la commande du moteur **25** permet d'entraîner une rotation de la pointe **5** dans les deux sens, comme indiqué par les flèches **F₂**. La combinaison des mouvements selon les flèches **F₁** et **F₂** définit une fenêtre de marquage dont la longueur est fixée par l'amplitude de la translation selon la direction Δ et dont la largeur est déterminée par l'amplitude de la rotation autour de l'axe **Ω.** Il est alors possible, lors de la mise en marche du système électromagnétique **4,** de venir impacter avec la pointe **5** tout point situé dans la fenêtre de marquage, telle qu'ainsi définie.

Cependant, il est apparu que, pour de grandes amplitudes de rotations autour de l'axe **Ω,** la qualité des impacts de la pointe **5,** à proximité des bords correspondants à l'amplitude de rotation maximum, n'était pas toujours d'une qualité satisfaisante. Afin de remédier à ce défaut, l'invention propose de mettre en oeuvre des moyens **30** de compensation des effets de la rotation de l'organe de marquage, en l'espèce la pointe **5,** de manière à garantir la qualité des impacts de la pointe **5** sur la surface **S** en tout point de la fenêtre de marquage.

Ces moyens de compensation **30** peuvent être réalisés de différentes façons, en fonction, notamment, du mode de réalisation du système de marquage et de la cinématique des moyens de déplacement **10.**

Selon l'exemple illustré, le système de marquage **4** est un système à micro percussions électromagnétique. Ainsi, le système **4** comprend une bobine électromagnétique **31,** placée dans le corps **32** du système **4,** ledit corps **32** étant fixé au berceau **20.** Le système de marquage **4** comprend, en outre, un noyau ferromagnétique **33,** disposé à l'intérieur de la bobine **31** et du corps **32,** pour être mobile en translation alternative selon une direction de marquage **D.** Le noyau ferromagnétique **33** est alors mobile, entre une position de repos **R,** telle qu'illustrée en trait plein à la **fig. 2****,** et une position de marquage **M,** repérée en trait mixte également à la **fig. 2****.** Le noyau ferromagnétique **33** est destiné à agir sur la pointe de marquage **5** pour, par son mouvement alternatif à l'intérieur de la bobine **31,** assurer un déplacement alternatif de la pointe **5** et donc permettre la réalisation d'une série de micro impacts dans la surface **S** à marquer. La pointe de marquage **5** se trouve alors également mobile, entre une position de repos, telle qu'illustrée à la **fig. 2****,** et une position de marquage, non représentée, dans laquelle elle est en contact avec la surface **S.** Il est à noter que la pointe de marquage **5** est asservie ou rappelée en position de repos par un ressort **34** qui tend à maintenir, à tout instant, l'extrémité de la pointe **5** opposée à la surface **S** en contact avec le noyau mobile **33.** Compte tenu de la présence du ressort **34,** la position de repos de la pointe **5** correspond à et se trouve définie par la position de repos du noyau **33.**

Afin de corriger automatiquement l'éloignement de la pointe **5** par rapport à la surface **S** qui serait induit par la rotation, autour de l'axe Ω, du berceau **20** et de la pointe **5** qui lui est liée, les moyens de compensation **30** comprennent une butée mobile **40** contre laquelle le noyau **31** est en appui en position de repos **R.** Cette butée mobile **40,** placée à l'arrière du noyau, à l'opposé de la pointe **5,** est solidaire d'un doigt **41** qui s'étend à partir de la butée **40** vers le chariot **12** et qui forme alors une came qui coopère avec un chemin de came **42** aménagé dans le chariot **12.** Le chemin **42** est alors conformé pour que, lors de la rotation du berceau **20** et donc du doigt **41** qui en est solidaire, la butée **40** se déplace, de manière à maintenir sensiblement constante la distance entre l'extrémité de la pointe **5** au repos et la surface **S** à marquer, cette distance étant mesurée perpendiculairement à la surface à marquer. Il est à noter que, compte tenu de l'existence des moyens de compensation **30** asservis à la rotation, le lieu de déplacement de la position au repos **R** de l'extrémité de la pointe **5** est une surface **S₁** sensiblement parallèle à la surface **S** à marquer alors que, en l'absence des moyens de compensation, la position de repos de la pointe décrirait un cylindre de révolution.

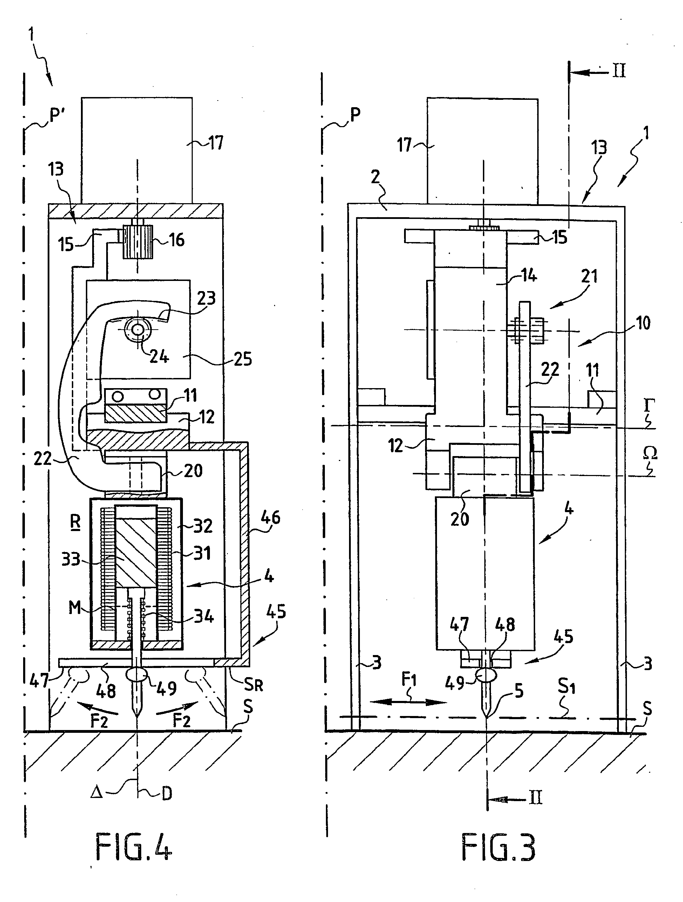

Selon l'invention, les moyens de compensation de la rotation ne comprennent pas nécessairement une came, telle que le doigt **41,** et un chemin de came, tel que la surface **42.** Ainsi, les **fig. 3** et **4** montrent une variante de réalisation d'un dispositif de marquage conforme à l'invention adoptant, pour les moyens de déplacement **10** de l'organe de marquage, la même cinématique que celle décrite en relation avec les **fig. 1** et **2** mais pour lesquels les moyens de compensation de la rotation de l'organe de marquage sont réalisés de manière différente.

En effet, selon cette variante de réalisation illustrée aux **fig. 3** et **4****,** les moyens de compensation comprennent des moyens **45** de définition d'une surface de référence **S_{R}** qui, selon l'exemple illustré, est sensiblement parallèle à la surface **S,** sans qu'il s'agisse ici d'une caractéristique strictement nécessaire à la réalisation de l'invention.

Selon l'exemple illustré, les moyens **45** de définition de la surface de référence **S_{R}** comprennent une potence qui est liée complètement au chariot **12** et qui porte, à son extrémité opposée au chariot **12,** une patte plane **47** dans laquelle est aménagée une rainure rectiligne **48** d'axe perpendiculaire à l'axe de rotation Ω. La pointe de marquage **5** passe dans cette rainure **48** où elle est susceptible de se déplacer lors de la rotation du berceau **20.** La pointe de marquage **5** comprend alors, en tant que moyen **49** de liaison avec la surface de référence **S_{R},** une boule **49** maintenue en appui par le ressort **34,** contre la surface **S_{R},** lorsque la pointe de marquage 5 est en position de repos. Ainsi, lorsque la bobine **31** n'est pas alimentée en courant électrique et que le noyau **33** est en position de repos, tout comme la pointe **5,** les moyens de définition de la surface **S_{R}** induisent automatiquement, lors de la rotation du berceau **20,** une translation de la pointe **5** en position de repos selon une direction Δ, ici confondue avec la direction de marquage **D.**

Selon l'invention, les moyens de compensation de la rotation de l'organe de marquage peuvent être mis en oeuvre dans le cadre d'autres cinématiques des moyens de déplacement que celles décrites en relation avec les **fig. 1** et **2****.**

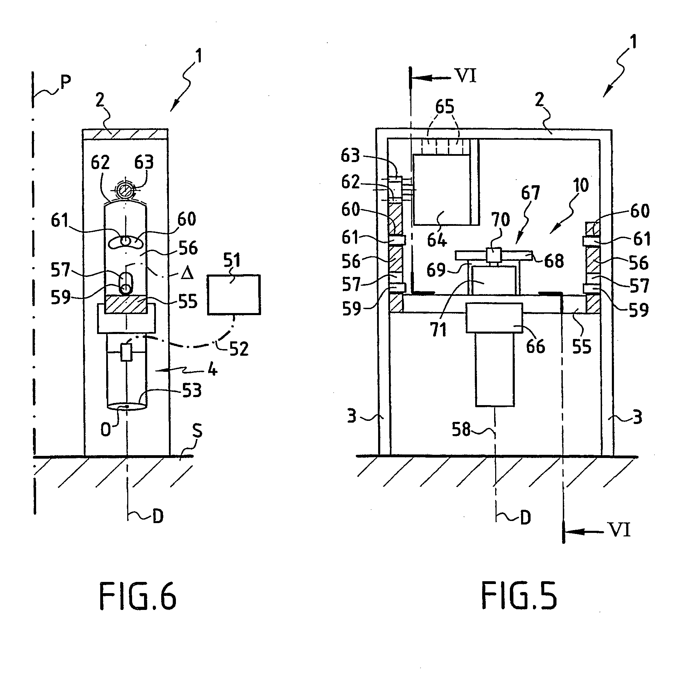

Ainsi, les **fig. 5** et **6** montrent une forme de réalisation d'un dispositif de marquage selon l'invention, qui incorpore des moyens de compensation de la rotation de l'organe de marquage et dont la cinématique des moyens de déplacement **10** diffère de celle décrite précédemment.

Selon cette forme de réalisation les moyens de marquage **4** ne sont pas à micro percussions mais à laser et comprennent alors une source laser **51,** telle que, par exemple, une source laser pulsée dont le rayon est acheminé par une fibre optique ou un faisceau de fibres optique **52** vers une lentille de marquage **53** qui constitue, au sens de l'invention, l'organe de marquage du dispositif **1.**

Selon cette autre forme de réalisation, les moyens de déplacement **10** comprennent une voie de guidage en translation **55** qui possède une direction r, parallèle au plan **P'** et à la surface à marquer **S,** et qui est adaptée sur le châssis, de manière à être mobile au moins en rotation autour de l'axe **Ω.**

Selon l'exemple illustré, la voie de guidage en translation **55** est fixée, à chacune de ses extrémités, sur un bras **56** qui fait, en outre, partie des moyens de déplacement en rotation de la voie de guidage **55,** comme cela apparaîtra par la suite.

Chaque bras **56** comprend, d'une part, une lumière **57** rectiligne allongée, d'axe Δ parallèle à la direction de marquage **D** définie par le rayon laser **58.** Chaque lumière **57** est alors engagée sur un pion **59** lié, de façon complète, au châssis **2,** de sorte que le pion **59** et la lumière **57** correspondante définissent une liaison à deux degrés de liberté, un degré de liberté en rotation et un degré de liberté en translation.

Chaque bras **56** comprend, d'autre part, une fenêtre **60** qui est incurvée et forme un chemin de came pour une came cylindrique **61,** liée au châssis et engagée dans la fenêtre **55.**

Enfin, l'un des bras **56,** en l'occurrence le bras gauche sur la **fig. 5****,** présente, en outre, un secteur denté **62** qui coopère avec un pignon **63** entraîné par un moteur **64,** tel que, par exemple, un moteur électrique pas à pas. Selon l'exemple illustré et afin de tenir compte du mouvement de translation qu'est susceptible de connaître le bras **56,** le moteur **64** est monté de manière pivotante sur le châssis **2** et la continuité de la coopération du pignon **63** avec le secteur denté **62** est assurée par au moins un ressort **65.**

Les moyens de déplacement **10,** selon cette forme de réalisation illustrée aux **fig. 5** et **6****,** comprennent, également, un chariot **66** qui est adapté sur la voie de guidage **55** pour être mobile en translation le long de cette dernière et sur lequel l'organe de marquage, en l'occurrence la lentille de marquage **53,** est adapté. Le chariot **66** est, également, associé à des moyens de déplacement en translation **67** qui, selon l'exemple illustré, comprennent une crémaillère **68** adaptée sur un bras **69** solidaire du chariot **66** et coopérant avec un pignon **70** entraîné par un moteur **71,** tel qu'un moteur électrique pas à pas, solidaire de la voie de guidage **55.**

Ainsi, la commande du moteur **71** entraîne une translation du chariot **66** et donc de la lentille de marquage, parallèlement à la voie **55,** tandis que la commande du moteur **64** entraîne une rotation des bras **56** et donc de la voie de guidage **55** qui pivote, de sorte que la lentille de marquage **53** est également déplacée en rotation.

Afin de compenser cette rotation, chaque fenêtre **60** est alors conformée pour induire, lors de la rotation de la voie de guidage **55,** une translation d'axe Δ de cette même voie de guidage et donc de la lentille de marquage **53,** de manière à compenser les effets de la rotation. Ainsi, dans une forme de réalisation, chaque fenêtre **60** sera conformée de manière que la distance, entre la surface à marquer **S** et le centre optique **O** de la lentille de marquage **53,** soit sensiblement constante et égale à la distance focale de la lentille **53,** cette distance étant mesurée perpendiculairement à la surface à marquer **S.**

Selon cette forme de réalisation des moyens de compensation de la lentille de marquage et, plus particulièrement, son centre optique se déplacent dans un plan ou dans une surface parallèle à la surface à graver, lorsque le spot laser de marquage décrit la fenêtre de marquage, cette surface étant située à une distance mesurée perpendiculairement à la surface à marquer est sensiblement égale à la distance focale de la lentille de marquage. Il n'est alors assuré qu'une compensation partielle de l'influence de la rotation sur la position de l'organe de marquage.

Toutefois, dans certains cas, en vue notamment d'augmenter la qualité du marquage dans toute la fenêtre de marquage, il convient de compenser complètement la rotation. Les moyens de compensation et, plus particulièrement, les fenêtres **60** seront alors adaptés pour que la distance, entre le point de marquage et le centre optique de la lentille, cette fois-ci mesurée le long de la droite définie par le rayon laser, soit égale à la distance focale. Dans ce cas, le lieu de déplacement du centre optique **O** de la lentille de marquage **53** ne sera plus un plan mais sera une surface tangente au plan, tel que défini précédemment, et situé entre ce plan et la surface à marquer **S.**

Selon les exemples de réalisations illustrés aux **fig. 1** à **4****,** le moteur **25,** assurant l'oscillation du système de marquage **4** autour de l'axe **Ω,** est solidaire du chariot **12** par l'intermédiaire du bras **14.** Toutefois, la cinématique, adoptée aux exemples des **fig.** 1 à **4****,** présente l'avantage de permettre, afin de réduire la masse des éléments en mouvement, de fixer le moteur **25** directement sur le châssis **2.** L'entraînement en rotation du système de marquage **4** est alors assuré par un pignon allongé qui s'étend sur une partie de la largeur du châssis parallèlement à l'axe **Ω** et le long duquel le secteur denté **23** se déplace en translation. Dans la mesure où les dents cannelures du pignon sont parallèles à l'axe **Ω** il n'existe alors pas d'obstacles à la translation du chariot **12.**

Selon les exemples décrits précédemment, le déplacement de l'organe de marquage est assuré par la combinaison d'une translation et d'une rotation d'axe sensiblement perpendiculaire à l'axe de translation. Toutefois, selon l'invention, le déplacement de l'organe de marquage pourrait également être obtenu par la combinaison de deux rotations d'axes perpendiculaires, les moyens de compensation seront alors adaptés pour compenser automatiquement les effets de chacune des rotations selon ces deux axes. Selon l'invention, le déplacement de l'organe de marquage **5, 53,** parallèle au plan de mouvement **P',** est assuré par au moins une rotation de l'organe de marquage autour d'un axe **Ω'** parallèle à l'autre plan **P** de mouvement.

## Revendications

1. Dispositif pour le marquage d'une surface **(S) comprenant** :
◆ un châssis porteur **(2),**
◆ des moyens de marquage **(4)** qui comprennent un organe de marquage **(5)** adapté pour réaliser un point ou une marque sensiblement ponctuelle,
◆ et des moyens de déplacement **(10)** de l'organe de marquage **(5)** parallèlement à deux plans de mouvement **(P, P'**) perpendiculaires entre eux et à la surface à marquer **(S)** pour réaliser, sur la surface à marquer, des signes en deux dimensions s'inscrivant dans une fenêtre de marquage définie par l'amplitude des déplacements de l'organe de marquage, le déplacement de l'organe de marquage parallèlement au plan de mouvement **(P)** étant assuré par au moins une rotation de l'organe de marquage autour d'un axe **(Ω)** parallèle à l'autre plan (**P'**) de mouvement,
**caractérisé en ce qu'**il comprend des moyens **(30)** de compensation, au moins partielle, de l'influence de la rotation sur la distance entre l'organe de marquage et le point de marquage sur la surface à marquer,
et ce que les moyens de déplacement de l'organe de marquage comprennent au moins :
◆ une voie **(11)** qui est liée, de manière complète, au châssis **(2)** et qui assure le guidage en translation d'un chariot **(12)** selon une direction (r) parallèle au plan (**P'**) et à la surface à marquer **(S),**
◆ des moyens moteurs **(13)** de déplacement en translation dans les deux sens du chariot **(12)** le long de la voie de guidage **(11)**,
◆ un berceau oscillant **(20)** qui supporte l'organe de marquage **(5, 53)** au moins et qui est adapté sur le chariot **(12)** pour au moins pivoter par rapport au chariot selon l'axe **(Ω)** parallèle à la direction (Γ),
◆ et des moyens moteurs **(21)** de déplacement en rotation dans les deux sens du berceau selon l'axe **(Ω).**

2. Dispositif de marquage selon la revendication 1, **caractérisé en ce que** les moyens moteurs **(21)** de déplacement en rotation sont solidaires du chariot **(12).**

3. Dispositif de marquage selon la revendication 1 ou 2, **caractérisé en ce que** :
◆ le berceau **(20)** est lié au chariot **(12)** sur une face orientée vers la surface à marquer **(S),**
◆ l'organe de marquage est adapté sur le berceau **(20),** à l'opposé du chariot **(12),**
◆ les moyens moteurs **(21)** de déplacement en rotation du berceau comprennent au moins un bras **(22)** dont l'une des extrémités est liée au berceau **(12)** et dont l'autre extrémité est située à l'opposé de la première et pourvue d'un secteur denté **(23)** coopérant avec un pignon **(24)** entraîné en rotation par un moteur **(25).**

4. Dispositif de marquage selon l'une des revendications 1 à 3, **caractérisé en ce que** les moyens de marquage **(4)** comprennent un système à micro percussion comprenant, en tant qu'organe de marquage, une pointe de marquage **(5)** mobile en translation alternative selon une direction **(D),** dite de marquage entre une position de repos et une position de marquage, la position de repos de la pointe de marquage étant la référence pour la mesure de la distance entre, d'une part, l'organe de marquage et, d'autre part, la surface à marquer **(S)** ou le point de marquage.

5. Dispositif de marquage selon l'une des revendications 1 à 4, **caractérisé en ce que** les moyens de compensation **(30)** sont adaptés pour maintenir, à une valeur constante, la distance, mesurée perpendiculairement à la surface de marquage, entre l'organe de marquage et la surface à marquage.

6. Dispositif de marquage selon la revendication 5, **caractérisé en ce que** les moyens de compensation **(30)** sont adaptés pour maintenir, à une valeur constante, la distance entre l'organe de marquage et le point de marquage sur la surface à marquer.

7. Dispositif de marquage selon l'une des revendications 3 à 6, **caractérisé en ce que** :
◆ le système de marquage à micro percussion **(4)** comprend une bobine électromagnétique **(31),** à lintérieur de laquelle est disposé un noyau ferromagnétique **(33)** qui agit sur la pointe de marquage **(5)** et qui est mobile en translation dans la bobine **(31),** entre une position de repos **(R)** et de marquage **(M),**
◆ et les moyens de compensation **(30)** comprennent une butée mobile **(40)** contre laquelle le noyau **(33)** est appuyé en position de repos **(R)** et qui est associé à un doigt **(41)** formant came qui coopère avec un chemin de came **(42)** solidaire du chariot **(12),** de sorte qu'une rotation du berceau **(20)** entraîne un déplacement du doigt **(41)** le long du chemin de came **(42)** dont le profil est adapté pour modifier la position de repos **(R)** du noyau **(33)** et de la pointe de marquage **(5),** en fonction de la position angulaire du berceau **(20).**

8. Dispositif de marquage selon l'une des revendications 1 à 7, **caractérisé en ce que** les moyens de compensation **(30)** sont adaptés pour induire une translation de l'organe de marquage **(5, 53)** par rapport à l'axe (Ω) et, selon une direction (Δ) perpendiculaire à l'axe (Ω), lors de la rotation de l'organe de marquage **(5, 53)** autour de l'axe (Ω).

9. Dispositif de marquage selon la revendication 8, **caractérisé en ce que** les moyens de compensation **(30)** comprennent, au moins une came **(61)** coopérant avec un chemin de came **(60)** dont le profil est adapté pour induire la translation de l'organe selon la direction (Δ).

10. Dispositif de marquage selon la revendication 9, **caractérisé en ce que** les moyens de compensation **(30)** comprennent au moins :
◆ des moyens **(45)** de définition d'une surface de référence (**S_{R}**),
◆ et des moyens **(40)** de liaison de l'organe de marquage **(5)** à la surface de référence (**S_{R}**), de manière à induire la translation de l'organe de marquage **(S)** selon la direction (Δ).

## Patentansprüche

1. Vorrichtung für die Markierung einer Fläche (S), umfassend:
- einen Tragrahmen (2),
- Markierungsmittel (4), die ein Markierungsorgan (5) umfassen, welches dazu ausgelegt ist, einen Punkt oder eine im Wesentlichen punktuelle Markierung auszubilden, und
- Mittel zur Bewegung (10) des Markierungsorgans (5) parallel zu zwei Bewegungsebenen (P, P'), die zueinander und zu der zu markierenden Fläche (S) senkrecht verlaufen, um auf der zu markierenden Fläche zweidimensionale Zeichen innerhalb eines durch den Umfang der Bewegungen des Markierungsorgans definierten Markierungsfensters herzustellen, wobei die Bewegung des Markierungsorgans parallel zu der Bewegungsebene (P) durch wenigstens eine Rotation des Markierungsorgans um eine zu der anderen Bewegungsebene (P') parallel verlaufende Achse (Ω) sichergestellt ist,
**dadurch gekennzeichnet, dass** sie Mittel (30) zum wenigstens teilweisen Kompensieren des Einflusses der Rotation auf den Abstand zwischen dem Markierungsorgan und der Markierungsstelle auf der zu markierenden Fläche umfasst,
und dass die Mittel zur Bewegung des Markierungsorgans wenigstens umfassen:
- eine Bahn (11), die mit dem Rahmen (2) vollstandig verbunden ist und die die Verschiebeführung eines Schlittens (12) entlang einer Richtung (Γ) parallel zu der Ebene (P') und zu der zu markierenden Fläche (S) sicherstellt,
- Antriebsmittel (13) zur Verschiebebewegung in den beiden Richtungen des Schlittens (12) entlang der Führungsbahn (11),
- ein Schwinggestell (20), das wenigstens das Markierungsorgan (5, 53) trägt und das an dem Schlitten (12) angebracht ist, um wenigstens gegenüber dem Schlitten um die zu der Richtung (Γ) parallel verlaufende Achse (Ω) zu schwenken, und
- Antriebsmittel (21) zur Drehbewegung in den beiden Richtungen des Gestells um die Achse (Ω).

2. Markierungsvorrichtung nach Anspruch 1, **dadurch gekennzeichnet, dass** die Antriebsmittel (21) zur Drehbewegung mit dem Schlitten (12) fest verbunden sind.

3. Markierungsvorrichtung nach Anspruch 1 oder 2, **dadurch gekennzeichnet, dass**:
- das Gestell (20) mit dem Schlitten (12) an einer der zu markierenden Fläche (S) zugewandten Seite verbunden ist,
- das Markierungsorgan von dem Schlitten (12) abgewandt an dem Gestell (20) angebracht ist,
- die Antriebsmittel (21) zur Drehbewegung des Gestells wenigstens einen Arm (22) umfassen, von dem eines der Enden mit dem Gestell (20) verbunden ist und dessen anderes Ende dem ersten gegenüberliegt und mit einem Zahnsegment (23) versehen ist, das mit einem durch einen Motor (25) drehangetriebenen Ritzel (24) zusammenwirkt.

4. Markierungsvorrichtung nach einem der Ansprüche 1 bis 3, **dadurch gekennzeichnet, dass** die Markierungsmittel (4) ein Mikroschlagsystem umfassen, das als Markierungsorgan eine Markierungsspitze (5) umfasst, die entlang einer sogenannten Markierungsrichtung (D) zwischen einer Ruheposition und einer Markierungsposition auf und ab verschiebebeweglich ist, wobei die Ruheposition der Markierungsspitze der Bezug für die Messung des Abstandes zwischen einerseits dem Markierungsorgan und andererseits der zu markierenden Fläche (S) oder der Markierungsstelle ist.

5. Markierungsvorrichtung nach einem der Ansprüche 1 bis 4, **dadurch gekennzeichnet, dass** die Kompensationsmittel (30) dazu ausgelegt sind, den senkrecht zu der zu markierenden Fläche gemessenen Abstand zwischen dem Markierungsorgan und der zu markierenden Fläche auf einem konstanten Wert zu halten.

6. Markierungsvorrichtung nach Anspruch 5, **dadurch gekennzeichnet, dass** die Kompensationsmittel (30) dazu ausgelegt sind, den Abstand zwischen dem Markierungsorgan und der Markierungsstelle auf der zu markierenden Fläche auf einem konstanten Wert zu halten.

7. Markierungsvorrichtung nach einem der Ansprüche 3 bis 6, **dadurch gekennzeichnet, dass**:
- das Mikroschlag-Markierungssystem (4) eine elektromagnetische Spule (31) umfasst, innerhalb derer ein ferromagnetischer Kern (33) angeordnet ist, der auf die Markierungsspitze (5) wirkt und der in der Spule (31) zwischen einer Ruhe- (R) und Markierungsposition (M) verschiebebeweglich ist, und
- die Kompensationsmittel (30) einen beweglichen Anschlag (40) umfassen, an dem der Kern (33) in der Ruheposition (R) abgestützt ist und der einem einen Nocken bildenden Finger (41) zugeordnet ist, welcher mit einer mit dem Schlitten (12) fest verbundenen Kurvenbahn (42) zusammenwirkt, so dass eine Rotation des Gestells (20) zu einer Bewegung des Fingers (41) entlang der Kurvenbahn (42) führt, deren Profil dazu ausgelegt ist, die Ruheposition (R) des Kerns (33) und der Markierungsspitze (5) in Abhängigkeit von der Winkelstellung des Gestells (20) zu verändern.

8. Markierungsvorrichtung nach einem der Ansprüche 1 bis 7, **dadurch gekennzeichnet, dass** die Kompensationsmittel (30) dazu ausgelegt sind, eine Verschiebung des Markierungsorgans (5, 53) gegenüber der Achse (Ω) und entlang einer zu der Achse (Ω) senkrechten Richtung (Δ) während der Rotation des Markierungsorgans (5, 53) um die Achse (Ω) zu bewirken.

9. Markierungsvorrichtung nach Anspruch 8, **dadurch gekennzeichnet, dass** die Kompensationsmittel (30) wenigstens einen Nocken (61) umfassen, der mit einer Kurvenbahn (60) zusammenwirkt, deren Profil dazu ausgelegt ist, die Verschiebung des Organs entlang der Richtung (Δ) zu bewirken.

10. Markierungsvorrichtung nach Anspruch 9, **dadurch gekennzeichnet, dass** die Kompensationsmittel (30) wenigstens umfassen:
- Mittel (45) zur Definition einer Bezugsfläche (S_{R}), und
- Mittel (40) zur Verbindung des Markierungsorgans (5) mit der Bezugsfläche (S_{R}), um die Verschiebung des Markierungsorgans (5) entlang der Richtung (Δ) zu bewirken.

## Claims

1. A device for the marking of a surface (S), that includes:
◆ a supporting chassis (2);
◆ marking means (4) that include a marking implement (5) designed to create a point or a mark that is more or less individual; and
◆ means (10) for movement of the marking implement (5) parallel to two planes of motion (P, P') perpendicular to each other and to the surface to be marked (S), in order to create two-dimensional symbols on the surface to be marked, located within a marking window determined by the amplitude of the movements of the marking implement, where the movement of the marking implement parallel to the movement plane (P) is effected by at least one rotation of the marking implement around an axis (Ω) parallel to the other movement plane (P'),
the device being **characterised in that** it includes means (30) for the at least partial compensation of the influence of the rotation on the distance between the marking implement and the marking point on the surface to be marked and
**in that** the means for moving the marking implement include at least:
◆ a channel (11) which is connected to the chassis (2) in a thorough manner and which provides guidance in linear motion for a trolley (12) in one direction (Γ) parallel to plane (P') and to the surface to be marked (S);
◆ motor means (13) for driving the trolley (12) in linear movement in both directions along the guidance channel (11) ;
◆ an oscillating cradle (20), which supports the marking implement (5, 53) at least, and which is fitted to the trolley (12) to at least pivot in relation to the trolley on axis (Ω) parallel to direction (r); and
◆ motor means (21) for the movement in rotation, in both directions, of the cradle on axis (Ω).

2. A marking device according to claim 1, **characterised in that** the motor means (21) for movement in rotation are attached to the trolley (12).

3. A marking device according to claim 1 or claim 2, **characterised in that**:
◆ the cradle (20) is connected to the trolley (12) on a face that is oriented toward the surface to be marked (S);
◆ the marking implement is fitted to the cradle (20), opposite to the trolley (12); and
◆ the motor means (21) for the movement in rotation of the cradle, include at least one arm (22), one of whose ends is connected to the cradle (12), and whose other end is located opposite to the first and equipped with a toothed sector (23) meshing with a sprocket wheel (24) that is driven in rotation by a motor (25).

4. A marking device according to any one of claims 1 to 3, **characterised in that** the marking means (4) include a micro-percussion system that uses, as its marking implement, a marking point (5) that is mobile in alternating linear motion in one direction (D), called the marking direction, between a rest position and a marking position, with the rest position of the marking point being the reference for measuring the distance between, firstly, the marking implement and, secondly, the surface to be marked (S) or the marking point.

5. A marking device according to any one of claims 1 to 4, **characterised in that** the compensation means (30) are designed to maintain at a constant value the distance, measured perpendicular to the marking surface, between the marking implement and the surface to be marked.

6. A marking device according to claim 5, **characterised in that** the compensation means (30) are designed to maintain at a constant value the distance between the marking implement and the marking point on the surface to be marked.

7. A marking device according to any one of claims 3 to 6, **characterised in that**:
◆ the micro-percussion marking system (4) includes an electromagnetic solenoid (31), within which is placed a ferromagnetic core (33) which acts upon the marking point (5), and which is mobile in linear motion in the solenoid (31), between a rest position (R) and a marking position (M); and
◆ the compensation means (30) include a mobile stop device (40) against which the core (33) rests in the rest position (R), and which is associated with a finger (41) forming a cam which meshes with a cam race (42) attached to the trolley (12), so that a rotation of the cradle (20) drives the movement of the finger (41) along the cam race (42), whose profile is designed to change the rest position (R) of the core (33) and of the marking point (5) as a function of the angular position of the cradle (20).

8. A marking device according to any one of claims 1 to 7, **characterised in that** the compensation means (30) are designed to induce a linear motion of the marking implement (5, 53) in relation to axis (Ω) and, in a direction (Δ) perpendicular to axis (Ω), during the rotation of the marking implement (5, 53) around axis (Ω).

9. A marking device according to claim 8, **characterised in that** the compensation means (30) include at least one cam (61) meshing with a cam race (60) whose profile is designed to induce the linear motion of the implement in direction (Δ).

10. A marking device according to claim 9, **characterised in that** the compensation means (30) include at least:
◆ means (45) to determine a reference area (S_{R}); and
◆ means (40) to connect the marking implement (5) to the reference area (S_{R}), so as to induce the linear motion of the marking implement (S) in direction (Δ).
